(19) **Europäisches Patentamt**
**European Patent Office**
**Office européen des brevets**

(11) **EP 2 748 738 B1**

(12) **EUROPEAN PATENT SPECIFICATION**

(45) Date of publication and mention
of the grant of the patent:
**14.10.2020 Bulletin 2020/42**

(51) Int Cl.:
*G06F 3/048* *(2013.01)*          *G06F 3/14* *(2006.01)*

(21) Application number: **12826160.9**

(86) International application number:
**PCT/US2012/050906**

(22) Date of filing: **15.08.2012**

(87) International publication number:
**WO 2013/028427 (28.02.2013 Gazette 2013/09)**

(54) **METHOD OF CREATING A SNAP POINT IN A COMPUTER-AIDED DESIGN SYSTEM**

VERFAHREN ZUR ERZEUGUNG EINES SNAP-PUNKTES IN EINEM CAD-SYSTEM

PROCÉDÉ DE CRÉATION D'UN POINT D'ACCROCHAGE DANS UN SYSTÈME DE CONCEPTION ASSISTÉE PAR ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2011 US 201113214962**

(43) Date of publication of application:
**02.07.2014 Bulletin 2014/27**

(73) Proprietor: **Trimble Inc.**
**Sunnyvale, CA 94085 (US)**

(72) Inventors:
• **JACKSON, Preston**
**Longmont, CO 80503 (US)**
• **LACZ, Patrick**
**Boulder, CO 80301 (US)**
• **MCLEAN, Paul**
**Denver, CO 80207 (US)**
• **BROWN, Brian G.**
**Longmont, CO 80503 (US)**
• **BACUS, John M.**
**Boulder, CO 80305 (US)**
• **HAUSWIRTH, Jeffrey**
**Westminster, CO 80234 (US)**

(74) Representative: **AWA Sweden AB**
**P.O. Box 45086**
**104 30 Stockholm (SE)**

(56) References cited:
US-A- 6 014 127          US-A1- 2003 206 169
US-A1- 2004 177 085      US-A1- 2005 068 290
US-A1- 2006 174 568      US-B1- 6 448 964
US-B1- 6 781 597          US-B1- 7 098 933

**Description**

**Field of Technology**

The present disclosure relates generally to tools for manipulating objects in a computer-aided design environment.

**Background**

Computer-aided design (CAD) software is a computer-based graphical design tool used to aid professional and/or amateur drafters to more effectively and efficiently create two- and three-dimensional drawings and other documents with graphical content. CAD software is used in a variety of different fields, such as engineering, architecture, automotive design, graphic design, advertising, fashion design, medicine, etc. Unlike a traditional "pen and paper" drafting space, where changes to a document require erasing previous work or discarding an old document and beginning a new document, CAD software provides a graphical user interface with a virtual layout space that may be easily altered and refined as desired using a computer. Generally, a user interacts with CAD software via input devices such as a keyboard, mouse, trackball, and/or stylus. The drafting document is displayed on a graphical display device, such as a computer monitor or screen.

Most CAD software programs allow creation of a variety of objects that may be added to a layout space and used with other objects to create complex shapes and/or objects. CAD software may provide a user with stock objects such as arcs, circles, rectangles, and other known geometric shapes and/or provide tools to create such shapes. Text boxes are also available, should a user choose to insert text into a drafting document. Often, CAD software will also provide stock images to enhance a drawing. For example, an architect may wish to include exemplary landscaping in a depiction of a building and may choose to use stock images of trees, grass, and bushes. Alternatively, a user may choose to import his or her own particular images or previously created shapes to the layout space.

The CAD software further provides a plurality of tools for manipulation of objects already in a drafting document or workspace. For example, a user may desire to relocate an object that he or she has placed in the drafting document. A "move" tool may be provided by the CAD software so that the user can move a created object within the drafting document. Alternatively, a user may desire to change the size of an object within the drafting document. Rather than requiring the user to delete and re-draw the object at a different size, a "scale" tool may be provided so that a user may re-size an object. Other types of tools that may be provided include functions such as "paint," "rotate," "skew," "stretch," "copy," and "paste." Buttons for invoking or selecting tools are usually provided in a "tool bar" area, which may be located along a border of the screen or the workspace, or in a movable window.

Functions such as move, rotate, stretch, scale, and skew are examples of "affine functions." Affine functions are provided by the CAD system as tools for refining objects that have been created, placed, or imported by the user into the CAD workspace. Generally, an affine function includes a linear transformation (e.g., rotation, scaling, or skew) and/or a translation or shift (e.g., a "move"). An affine function can be represented as:

$$\mathbf{x} \rightarrow \mathbf{A}\mathbf{x} + \mathbf{b} \qquad\qquad \text{Equ. 1}$$

where x is a vector representing an object being transformed, A is a matrix representing a linear transformation, and b is a vector representing a translation or shift. Generally, an affine function preserves 1) a co-linearity relation between points (i.e., the points which lie on a line continue to be collinear after the transformation), and 2) ratios of distances along a line (i.e., for distinct collinear points p1, p2, p3, the ratio I p2- p1 I / I p3 - p2 I is preserved).

To perform a function on an object, a user selects the object and then selects the proper tool for the desired manipulation of the object, or vice versa. A user may then perform the desired function by way of user inputs, such as clicking a mouse, touching a touch screen, dragging the object or a grip on the object, dropping the object or grip at a desired location, releasing the object or grip, entering coordinates via a keyboard, or any number of suitable input methods. Once the user has completed the desired function, the user may choose another tool to perform another function on the object or may choose another object on which to perform the same function or another function.

Examples of prior art may be found in US 6781597 B1 relating to edit modes for three-dimensional modeling systems, and US 6014127 A relating to a cursor positioning method. A further example may be found in US 6448964 B1, which relates to a graphic object manipulation tool.

**Summary**

There is disclosed a method of moving a snap point of an object, as well as a corresponding computer-readable medium storing instructions that when executed by one or more processors cause the one or more processors to perform the steps of the method. The method includes selecting an object on a workspace of a computer-aided design system, and selecting a tool that results in a set of first grips and a second grip being displayed in association with the object. The set of first grips is associated with at least a resize function, and the second grip comprises a first portion associated with a rotate function and a second portion indicating a snap point location of the object. The snap point of the object facilitates placement of the object as the object is moved. The second portion of the second grip also indicates a center of rotation for the rotate function and the first portion of the second grip enables a user to rotate the object around the snap point. The method also includes selecting the second grip of the object, and moving the second grip to a desired location to create the snap point for the object at the desired location. Additionally, the method includes moving the object so that the snap point of the object snaps to at least one of another point on the workspace, another object on the workspace, or a line displayed on the workspace.

The dependent claims relate to preferred embodiments.

## Brief Description of the Drawings

Fig. 1 is a block diagram of an example computer system that can be used to implement the CAD system.

Fig. 2 is an example workspace in a CAD environment.

Figs. 3A-3E are example icons that may be used to represent a cursor in a CAD environment.

Figs. 4A-4C are examples of an object, a selected object displaying a center grip, and a selected object with a number of possible associated snap points.

Fig. 5A-5B are flow diagrams of an example method for creating one or more snap points associated with a selected object in a CAD environment and an example method of moving a selected object having one or more snap points in a CAD environment.

Fig. 6A-6D show, step-by-step, the creation of a snap point associated with an object in a CAD environment.

Fig. 7A-7D show, step-by-step, moving an object and snapping a snap point associated with the object to another snap point in the workspace in a CAD environment.

Fig. 8 is a flow diagram of an example method for facilitating the creation of one or more snap points associated with a selected object in a CAD environment.

Fig. 9 is a flow diagram of an example method for facilitating the movement of an object with one or more associated snap points in a CAD environment.

## Detailed Description

In embodiments described below, a CAD system permits a user to create a snap point for, and/or move an existing snap point of, an object in a workspace of the CAD system to a desired location. A snap point of an object is a point associated with the object that facilitates precise placement of the object, in at least some embodiments. When the object is moved by the user, the snap point may move with the object in a fixed position relative to the object. As the object moves and when the snap point comes into proximity with a point, another object, a line, etc., in the workspace, the CAD system may cause the object to move so that the snap point "snaps" to the other point, object, line, etc. If the user continues trying to move the object, the snap point eventually "un-snaps" from the other point, object, line, etc., and the object resumes movement.

For ease of explanation, references are made to the user utilizing a mouse and a pointer to create/move the snap point. However, one of ordinary skill in the art will recognize, in view of the teachings and disclosure herein, that any number of suitable input methods/devices may be employed by a user to interact with the CAD system. For example, a user may select objects, select/activate user interface items (such as selecting/activating buttons, grips, etc.), move objects, modify objects, move snap points, etc., by providing inputs via other suitable man/machine interface devices such as a trackball, a stylus, a touch screen, a multi-touch screen, a voice command/voice recognition system, etc.

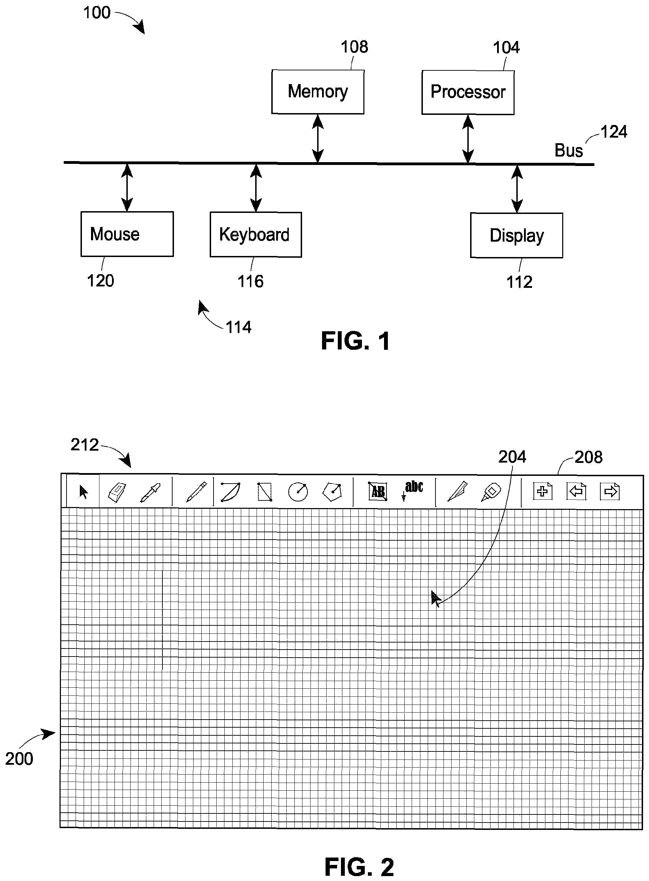

Fig. 1 is a block diagram of an example computer system 100 that can be used to implement a CAD system that permits a user to create and/or move a snap point of an object. The computer system 100 includes one or more processors 104, one or more memory devices 108, one or more display devices 112 and one or more user input devices 114, such as a keyboard 116, and a mouse 120. The one or more processors 104, the one or more memory devices 108, the one or more display devices 112, and the one or more user input devices 114 are coupled together via one or more busses 124. In other embodiments, the one or more user input devices include one or more of a trackball, a stylus, a touch screen, a multi-touch screen, a voice command/voice recognition system, etc. The keyboard 116 has one or more keys for interacting with a graphical user interface provided by the CAD system, which may be displayed on the one or more display devices 112. The mouse 120 can have one or more buttons (not shown) for interacting with the graphical user interface. The one or more processors 104 execute machine readable instructions stored in the one or more memory devices 108 to implement a CAD system. The one or more processors 104 may include one or more of a general purpose processor or a special purpose processor such as a graphics processor. The memory devices may include one or more of random access memory (RAM), read only memory (ROM), a magnetic disk, an optical disk, FLASH memory, etc.

Fig. 2 is an example work space provided by a CAD system. The workspace 200 may be displayed on a display device such as the example display device 112 of Fig. 1. For example, the processor 104 may cause the workspace 200 to be displayed on the display device 112. The workspace 200 will be described with reference to Fig. 1 for illustrative purposes. The workspace 200, however, may be utilized in conjunction with other suitable devices as well.

The workspace 200 provides a drafting area in which a user may place one or more objects for manipulation. The workspace 200 may provide a grid, which may or may not be visible, to allow more precise placement of objects in the workspace. For example, the placement of an object may be limited to discrete points on the grid so that an endpoint, a line segment, a corner, etc., of the object "snaps" to a grid point. Alternatively, the workspace 200 may omit the grid placement, allowing the user more freedom to place objects as he or she desires. The CAD system may allow a user to specify whether or not a workspace 200 has a grid and the granularity of the grid.

A user may interact with the CAD system using a cursor 204, as an example. The cursor 204 may be manipulated via a user input device, such as the mouse 120. Also, the cursor 204 may be implemented by other input devices as well, such as a trackball, stylus, keyboard, touch screen, or any other suitable input device. As will be explained in more detail below, a cursor 204 may be displayed as a different icon depending on the function that is to be performed. For example, the cursor 204 may have a different appearance depending on which tool a user has selected. When the CAD system is utilized on a device with a touch screen, the cursor 204 optionally may be omitted, at least in some scenarios.

The CAD system may provide a toolbar 208, shown in Fig. 2 extending along the top of the workspace 200. For example, the processor 104 may cause the toolbar 208 to be displayed on the display device 112. The toolbar 208 includes a number of different tools for creating and manipulating objects in a workspace 200. The example set of tools shown in the example toolbar 208 of Fig. 2 includes: select 212, draw, create arc, create square, create circle, create polygon, text box, label, dimensions, erase, paint, cut, paste, and start presentation. Additionally, one or more of these tools may include a drop-down menu that, when selected by the user, such as with the cursor 204, provides an additional listing of options. For example, the select tool 212 may include a drop-down listing that provides different functions associated with the affine function tool. One of ordinary skill in the art will appreciate that the toolbar 208 could include any suitable number and/or variety of suitable tools. Furthermore, the toolbar 208 may be positioned in any number of suitable locations and/or orientations. For example, a similar toolbar may extend along another border of the workspace 200. Alternatively, a toolbar may be a movable window. The CAD system may allow a user to place the toolbar 208 in a desired position using the cursor 204.

In some embodiments, the select tool 212 is an affine function tool 212 that allows a user to manipulate an object by performing various affine transformations such as move, resize, rotate, skew, etc. Additionally, the affine function tool 212 may permit a user to create/move a snap point of the object, as will be discussed in more detail below.

To interact with the CAD system, a user manipulates the user input device (e.g. the mouse 120) associated with the cursor 204. A user may select a desired tool from the toolbar 208 by placing the cursor 204 over the tool and selecting the tool by clicking the mouse 120, for example. The CAD system may then change the appearance of the cursor 204 so that the cursor 204 has an appearance indicative of the tool that the user has selected. For example, if the user selects the "draw" tool, the appearance of the cursor 204 may be changed to a pencil-shaped icon, indicating that the "draw" tool has been successfully selected. A user may then move the cursor 204 to perform a desired function within the workspace 200.

In some embodiments, such as with systems that utilize a touch screen, the cursor 204 may be omitted. In other embodiments utilizing a touch screen and another input device such as a mouse, the cursor 204 is included and the user moves the cursor with the mouse, but can also interact with the CAD system, such as selecting tools, selecting objects, selecting grips, etc., using the touch screen and without using the cursor 204.

The processor 104 implements the CAD system by executing instructions stored in/on the one or more memory devices 108. For example, the processor 104 causes the workspace 200 to be displayed on the display device 112. Also, the processor 104 may receive the user inputs discussed above and may cause the appearance of the cursor 204 to change as displayed on the display device 112 in response to the user inputs. For example, the processor may detect that the cursor 204 is over an object, a grip, a toolbar button, etc., and, in response, change the appearance of the cursor when appropriate.

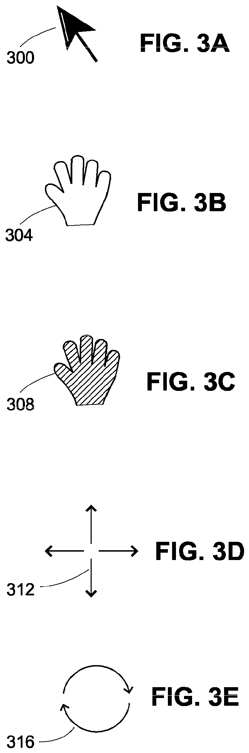

Figs. 3A-E are examples of icons that may be used to display the cursor 204 when different tools are selected and/or when different functions are invoked or available. For example, when a user enables the affine function tool 212, the cursor 204 may be displayed as an arrow icon 300 as depicted in Fig. 3A. The arrow icon 300 may indicate to the user that the affine function tool 212 has been enabled and that a user may select an object on which to perform one or more affine functions. Additionally or alternatively, some other suitable graphical mechanism indicates to the user that the affine function tool 212 has been enabled. For example, a toolbar button corresponding to the affine function tool may be highlighted. The affine function tool 212 may permit a user to perform affine functions on objects, such as move, resize, rotate, etc.

As will be discussed in further detail below, when the user moves the cursor 204 into close proximity with one of the affine grips associated with a selected object, the cursor 204 may be displayed as an open hand icon 304 as depicted in Fig. 3B. The open hand icon 304 indicates to the user that one or more affine functions associated with one of the grips may be performed by clicking the mouse and selecting a particular grip.

Should the user choose to select one of the affine grips associated with an object, the cursor 204 may be displayed as a closed hand icon 308 as depicted in Fig. 3C. Once the user has chosen a grip and moved the cursor 204 to that grip, the user may depress the mouse key in order to "select" the grip. The cursor may be displayed as the closed hand icon 308 as long as the mouse key or other input device is depressed, indicating to the user that the affine function associated with the grip is being performed.

The cursor 204 may alternatively be displayed as an icon that depicts which affine function is associated with a particular affine grip. For example, when the user moves the cursor 204 to particular areas on an object, the cursor 204 may be displayed as the four arrows icon 312 shown in Fig. 3D. The four arrows icon 312 serves as an indication to the user that the user may now execute a "move" function on an object by clicking on and dragging the object to a desired location. Once the object has reached the desired location, the user may drop the object to complete the move function.

Still further, the cursor 204 may be displayed as rotation icon 316, as shown in Figure 3E. The rotation icon 316 serves as an indication to the user that the user may now execute a "rotate" function on an object by clicking on and dragging a rotate grip associated with the object. Once the selected object has reached the desired orientation, the user may release the rotate grip to complete the rotate function.

It will be appreciated by one of ordinary skill in the art that the cursor 204 may be displayed as any number of suitable icons to indicate to a user that a certain tool or function is available for manipulation of an object in a workspace 200. Alternatively, the appearance of the cursor may change to indicate that a grip has been selected or that a tool is available. Changing the appearance of the cursor may include one or more of changing the shape, changing the color, causing the cursor to blink or flash, highlighting the cursor, shading the cursor, etc.

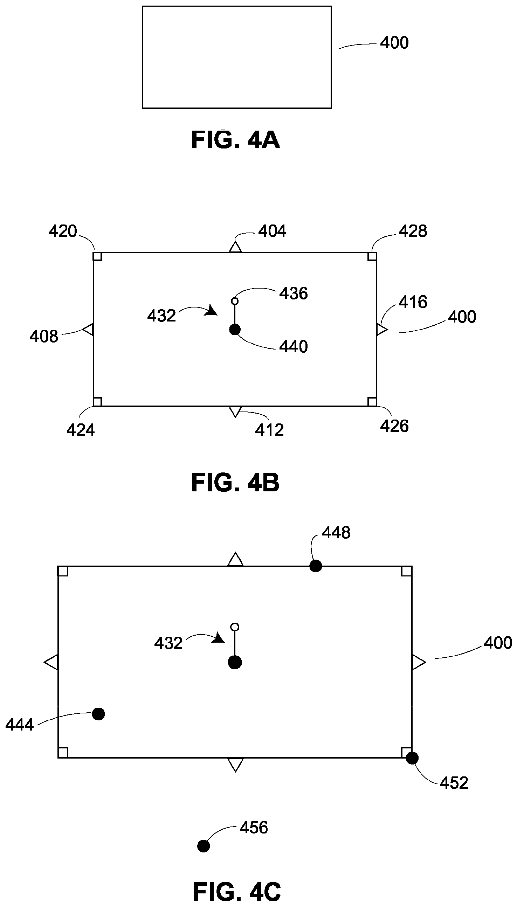

Fig. 4A shows an example workspace 200 where a user has added an object 400 using a tool from the toolbar 208, for example. The object 400 could be added to the workspace by any number of methods. For example, the object 400 could be created by the user with one of the create tools, such as draw line, create circle, create square, create text box, create arc, etc. Alternatively, the object 400 could be copied and then pasted, imported from another application, copied from another workspace, placed using clip art, or placed using any number of other suitable methods. Fig. 4A shows the object 400 as an unselected graphic object. The object 400 does not display any grips, indicating that there are no functions for manipulating the object available to the user when the object 400 is unselected.

Fig. 4B shows the object 400 after the object has been selected in the workspace 200 displaying a set of first grips 404-428 and a second grip 432. The first grips 404-428 correspond to grips for resizing the object 400. Alternatively, other first grips may correspond to other suitable functions, such as a skew function. The second grip 432 corresponds to a rotate function for rotating the object 400. For example, the second grip 432 includes a first portion 436 associated with the rotate function. More specifically, when the cursor 204 is located over the first portion 436, a user can invoke the rotate function. When the second grip 432 corresponds to the rotate function or another suitable affine function, the second grip 432 includes a second portion 440 associated with creating/moving a snap point. More specifically, when the cursor 204 is located over the second portion 440, a user can create/move a snap point, as will be described below in more detail. Additionally, the second portion 440 indicates a center of rotation for the rotate function.

The second grip 432 may be located generally at a center point of the object 400. The second grip 432 is sometimes referred to herein as a center of operation grip 432. To select the object 400, the user chooses a suitable tool 212 from the toolbar 208 using the cursor 204. For example, the user may choose the affine tool 212. Once the affine tool 212, for example, is enabled, the user moves the cursor 204 to the object 400 and clicks on the object 400. The object 400 is then a "selected object" and the center of operation grip 432 along with the set of first grips 404-428 are displayed as shown in Fig. 4B.

Fig. 4C shows the selected object 400 in the workspace 200. Fig. 4C also illustrates a number of possible snap points 444-456 placed by the user and associated with the selected object 400 of Fig. 4C. A user may place a snap point 444 within the borders of the selected object 400. Alternatively, a user may place a snap point 448 on the border of a selected object 400 or a user may place a snap point 452 at a vertex of a selected object 400. Still further, a user may create a snap point 456 outside of the borders of a selected object 400. In an embodiment, the snap point may be placed anywhere within the workspace of the CAD system. In another embodiment, the snap point may be placed within or on the object. In another embodiment, the snap point may be placed on a border of the object. The snap point may be moved using the center of operation grip 432, as will be discussed in more detail below. In the example of Figs. 4B and 4C, when the second portion 440 is selected by the user, a user can create/move a snap point, as will be described below in more detail.

Once the user has completed placing a snap point on the object 400, the user may choose to move the object, as will be discussed further below. Alternatively, the user may choose to select another tool, to select another object, or to select no object. Any of these latter events will cause the object 400 to be unselected. Once an object is unselected, it returns to the state of Fig. 4A and the snap point that was placed by the user is removed, in an embodiment. In other words, should the user select the object again, the snap point placed (as described with respect to Fig. 4B) is lost and cannot be utilized, in an embodiment. In other embodiments, the snap point placed (as described with respect to Fig. 4C) is not lost when the object is unselected, but remains until the snap point is removed by the user, the object 400 is deleted, etc.

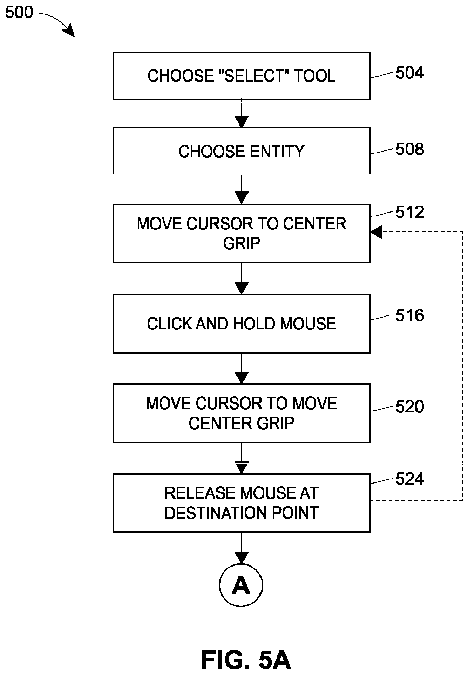

Fig. 5A is a flow diagram of an example method 500 for creating a snap point on an object. The method 500 may be implemented by a device such as the example computer system 100 of Fig. 1. The method 500, however, may be implemented by other suitable devices as well. Additionally, the method 500 may be implemented in conjunction with a CAD system workspace such as the example workspace 200 of Fig. 2, and will be described with reference to Fig. 2 for illustrative purposes. The method 500, however, may be utilized with other suitable workspaces as well. Further, the method 500 will be described with reference to Figs. 4B and 4C for illustrative purposes. The method 500, however, may be utilized with other suitable types of grips different than the grips illustrated in Figs. 4B and 4C.

A user first invokes a suitable tool, such as the affine tool 212 at block 504 by moving the cursor 204 using a user input device, such as the mouse 120, to direct the location of the cursor 204. Once the user has placed the cursor 204 over the affine tool 212, for example, on the tool bar 208, the user clicks the mouse to invoke the affine tool 212.

Referring again to Fig. 5A, at block 508 the user selects, using the affine tool 212, for example, an object 400 to manipulate in the workspace 200. The user moves the mouse 120 to place the cursor 204 over the object 400. The user then clicks on the object 400 to select the object 400. The object 400 now features the set of first grips 404-428 and a second grip 432, e.g., a center of operation grip 432, such as discussed above with respect to Figs. 4B and 4C.

With reference again to Fig. 5A, the user moves the cursor 204 to the center of operation grip 432 at block 512. The cursor 204 may change form to display an "open hand" icon, for example, when the cursor 204 is over or in close proximity to the center of operation grip 432. For example, when the cursor 204 is over or in close proximity to the second portion 440 of the center of operation grip 432, the cursor 204 may change form to display an "open hand" icon. This indicates to the user that the cursor 204 is in close enough proximity to the center of operation grip 432 to use the center of operation grip 432 to perform a function associated with creating/moving a snap point. If the center of operation grip 432 also corresponds to a rotate function, the cursor may change form to something other than an "open hand" to indicate the rotate function depending on the exact positioning of the cursor 204 with respect to the center of operation grip 432. For example, when the cursor 204 is over or in close proximity to the first portion 436 of the center of operation grip 432, the cursor 204 may change form to display a "rotate" icon such as in Fig. 3E.

At block 516, the user selects the center of operation grip 432 by moving the cursor 204 over the center of operation grip 432 and then clicks a button of the mouse 120. The cursor 204 is displayed as a "closed hand" icon 308 as discussed above with respect to Fig. 3C to indicate to the user that the center of operation grip 432 is successfully selected for creation/movement of a snap point. At block 520, the user moves the cursor while continuing to hold the mouse button in order to move the center of operation grip 432 (or a copy of the grip 432, the second portion 440 of the grip 432, a copy of the second portion 440, etc.). As the user moves the cursor, the "closed hand" icon 308 drags the center of operation grip 432 (or the copy of the grip 432, the second portion 440 of the grip 432, the copy of the second portion 440, etc.) in response to the moving location of the cursor 204. When the user determines that the center of operation grip 432 (or the copy of the grip 432, the second portion 440 of the grip 432, the copy of the second portion 440, etc.) has reached a desired location, the user releases the mouse button at block 524. A new snap point associated with the object 400 is created where the center of operation grip 432 (or the copy of the grip 432, the second portion 440 of the grip 432, the copy of the second portion 440, etc.) is released. It may be desirable for the center of operation grip 432 to remain at the location where it was released. In other words, the operation described above may move the center of operation grip 432, which may also serve as a snap point. Alternatively, the center of operation grip 432 may return to the center of the object 400 upon release by the user (or the grip 432 remains in place while a copy of the grip 432 or a copy of the second portion 440, etc., was moved). In other words, the operation described above may create a new snap point while leaving the center of operation grip 432 at the original location of the center of operation grip.

The cursor 204 is again displayed as the arrow icon 300 upon release of the center of operation grip 432 (or the copy of the grip 432, the second portion 440 of the grip 432, the copy of the second portion 440, etc.).

Optionally, a user may then choose to repeat the process to create an additional snap point by returning to block 512 as shown in Fig. 5A. On the other hand, in an embodiment, the user cannot create an additional snap point according to the method 528. For example, in an embodiment, the flow cannot return to block 512. As another example, in another embodiment, when the flow returns to block 512, the previously created snap point is lost or removed.

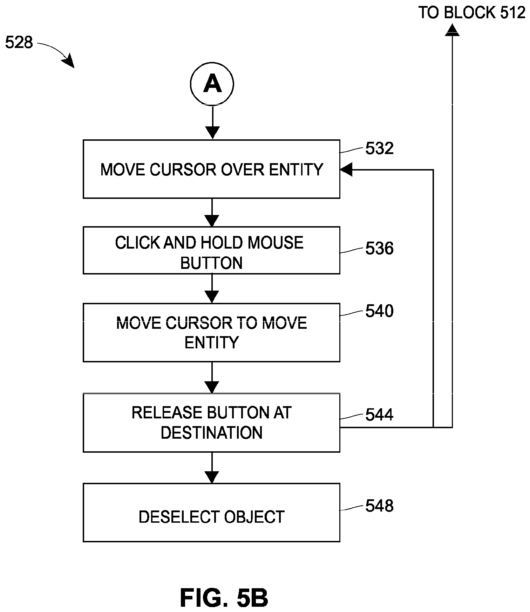

After creating one or more snap points, the user may choose to move the object 400 so that a snap created/moved at block 524 snaps to another snap point on the workspace (such as on another object), another object on the workspace, a grid point on the workspace, etc. Fig. 5B is a flow diagram of an example method 528 for moving an object having an associated snap point. The method 528 may be implemented by a device such as the example computer system 100 of Fig. 1. The method 528, however, may be implemented by other suitable devices as well. Additionally, the method 528 may be implemented in a CAD system workspace such as the example workspace 200 of Fig. 2, and will be described with reference to Fig. 2 for illustrative purposes. The method 528, however, may be utilized with other suitable workspaces as well. Further, the method 528 will be described with reference to Figs. 4B and 4C for illustrative purposes. The method 528, however, may be utilized with other suitable types of grips different than the grips illustrated in Figs. 4B and 4C.

At block 532, the user invokes the move function by placing the cursor 204 over the object 400. The cursor 204 is displayed as the four arrows icon 312, as described in Fig. 3D, when the move operation is available. The user clicks and releases the mouse button, beginning the move operation. At block 536, the user clicks and releases the mouse button to select the move function for the specific object 400. At block 540, the user moves the cursor 204 in order to move the object 400. If there is not a point within a specified distance of a snap point to which the snap point can "snap", then the object 400 is moved without "snapping" to any particular point or object, without snapping to snap points in the workspace 200. Once the object 400 reaches a desired location, the user clicks and releases the mouse button at block 544, which releases the object 400 at its new location. If there is a point within the specified distance of the snap point to which the snap point can "snap" (i.e., another snap point), then the object 400 "snaps" to the other snap point. Once the object 400 is released, a user may choose to move the object 400 again by returning to block 532 of Fig. 5B. Alternatively, the user may create additional snap points by returning to block 512 of Fig. 5A. Still further, a user may deselect the object 400 by choosing another tool or clicking away from the object 400. Once an object 400 is deselected, the snap points associated with the object 400 may be erased or lost as discussed above.

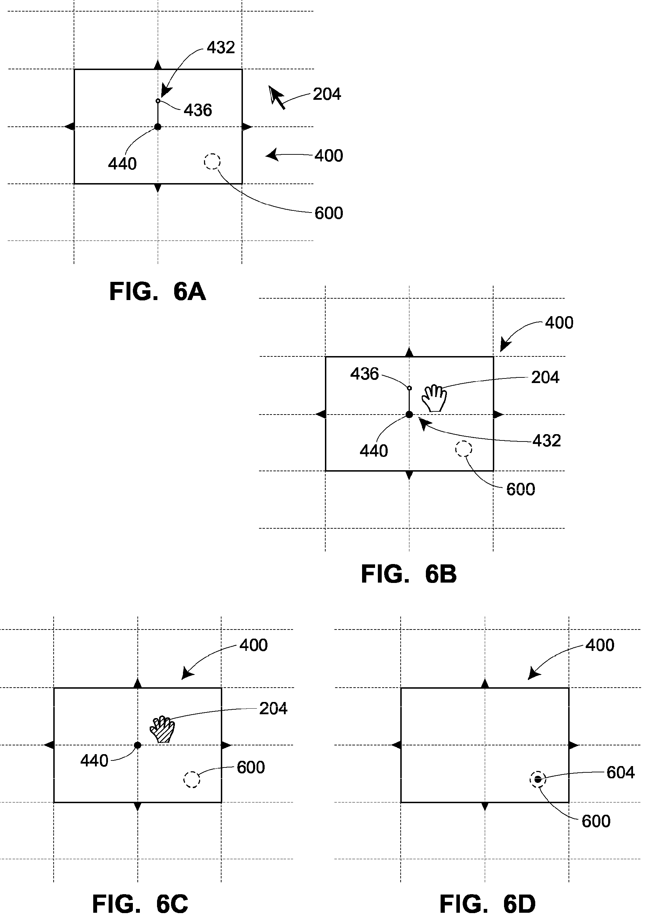

Fig. 6A-D depicts an example step-by-step creation of a snap point associated with an object 400. Fig. 6A shows a selected object 400 in a workspace 200. A cursor 204 is displayed as an arrow icon 300 as discussed in Fig. 3A, indicating that the affine tool 212 is invoked. A center of operation grip 432 associated with the selected object 400 are displayed on the selected object 400. The center of operation grip 432 may have a first portion 436 and a second portion 440 as described above with respect to Figs. 4B and 4C. For example, the first portion 436 may correspond to a rotate function and the second portion 440 may correspond to creating/moving a snap point. The other function grips (not numbered in this figure) may correspond to one or more affine functions such as a resize function, a skew function, etc. The dotted boundary 600 indicates the desired location where a snap point is to be created in association with selected object 400.

In Fig. 6B, the user moves the cursor 204 over the center of operation grip 432 associated with the selected object 400 (for example, the second portion 440). The cursor 204 is now displayed as an open hand icon 304, as discussed above with respect to Fig. 3B. This change in display indicates to the user that the cursor 204 is in close enough proximity to the center of operation grip 432 associated with the selected object 400 that the center of operation grip 432 may be selected. The change in display may also indicate the create/move a snap point function may be invoked when the user selects the grip 432 (or the second portion 440 of the grip 432).

In Fig. 6C, the user clicks the mouse 120, selecting the center of operation grip 432 associated with the selected object 400 (or the second portion 440 of the grip 432). The cursor 204 is now displayed as a closed hand icon 308, as discussed above with respect to Fig. 3C. This change in display indicates to the user that the center of operation grip 432 associated with the selected object 400 has been invoked. The change in display may also indicate the create/move a snap point function has been invoked. The user may now drag the center of operation grip 432 (or the second portion 440 of the grip 432) associated with the selected object 400 to its desired location 600.

In Fig. 6D, the user has released the mouse button, releasing the center of operation grip 432 (or the second portion 440 of the grip 432) and creating a new snap point 604 associated with the selected object 400 at the desired location. The snap point 604 associated with the selected object 400 may remain at the desired location so long as the selected object 400 remains selected. Once the user navigates away from the selected object 400, so that it is no longer selected, the snap point 604 may be erased or lost.

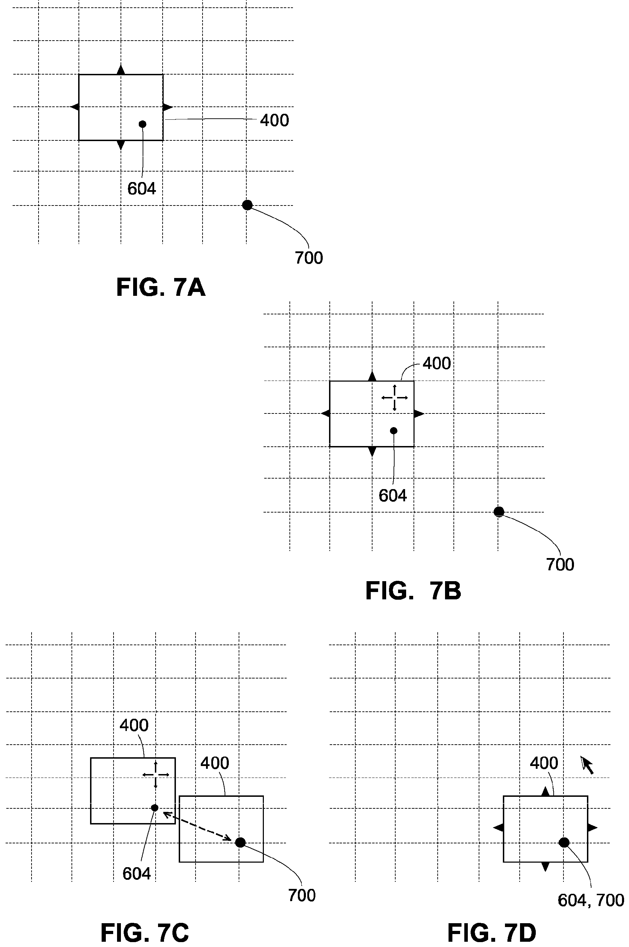

Fig. 7A-D shows an example step-by-step move function after the user has created the snap point 604 as shown in Fig. 6D. Fig. 7A shows the selected object 400 in the workspace 200. The selected object 400 has the associated snap point 604 as shown in Fig. 6D. A cursor 204 is provided for manipulation of the selected object 400. Another snap point 700 not associated with the selected object 400 also exists within the workspace 200.

In Fig. 7B, the user moves the cursor 204 over the selected object 400. The cursor 204 is now displayed as a four arrows icon 312, as discussed above with respect to Fig. 3D. This change in display indicates to the user that the move function is now available.

In Fig. 7C, the user depresses the mouse key and moves the selected object 400 by dragging the mouse. The selected object 400 moves responsive to the location of the cursor 204. When the snap point 604 associated with the selected object 400 comes into proximity with the other snap point 700 (e.g., within a specified distance), the selected object 400 is moved so that the associated snap point 604 "snaps" with the other snap point 700. For example, the selected object 400 may be displayed so that the snap point 604 associated with the selected object 400 overlaps with the other snap point 700. When the snap point 604 associated with the object 400 is a significant distance from the other snap point 700 (e.g., not within the specified distance), then the selected object 400 performs a normal move operation without "snapping".

In Fig. 7D, the user releases the mouse key and the snap point 604 of the selected object 400, being in close proximity to the snap point 700 not associated with the selected object 400, snaps to the snap point 700 not associated with the selected object 400. The cursor 204 is displayed as the arrow icon 300, as discussed in Fig. 3A, indicating that the affine function tool is available and that the move operation is complete.

Alternatively, as will be understood by one of ordinary skill in the art, the user may interact with the center of operation grip 432 via any number of suitable input methods. For example, rather than clicking and dragging a mouse, a user may click and release the mouse to select the center of operation grip 432, may drag the center of operation grip 432 to a desired location, and then click and release the mouse to position the center of operation grip 432 at the desired location.

The center of operation grip 432 and the other grips 404-428 associated with a selected object 400 may be displayed in any number of suitable ways to aid the user in his or her editing of an object. For example, the center of operation grip 432 and the other grips 404-428 may be drawn in a relatively light color or with light shading when the cursor 204 is not in close proximity to the center of operation grip 432 or to one of the other grips 404-428. As the cursor 204 approaches the center of operation grip 432 (or a particular portion of the grip 432) or one of the other grips 404-428, the particular grip (or portion of the grip) may be displayed in a relatively darker color or with darker shading, for example. This will draw the user's attention to the grip when it is becoming relevant to the position of the cursor 204. As another example, the center of operation grip 432 and the other grips 404-428 may be displayed as relatively small when the cursor 204 is not in close proximity to the center of operation grip 432 or one of the other grips 404-428. As the cursor 204 approaches the center of operation grip 432 (or a particular portion of the grip 432) or one of the grips 404-428, the particular grip (or a portion of the grip) may be displayed as relatively larger to draw the user's attention to the grip when it is becoming relevant to the position of the cursor 204. Similarly, when a particular grip is selected (or a portion of the grip), the other now irrelevant grips (or portions of the grip) associated with the object 400 may be hidden, reduced in size, "greyed," displayed with transparency, etc. Furthermore, if a selected object 400 is so small within the workspace 200 that certain grips begin to compete with one another for click target real estate, the less frequently used grips may be hidden or deactivated to preserve space on the object 400 for the more frequently used grips. The hidden grips may then be displayed should the user choose to zoom in on an object 400 in the workspace 200.

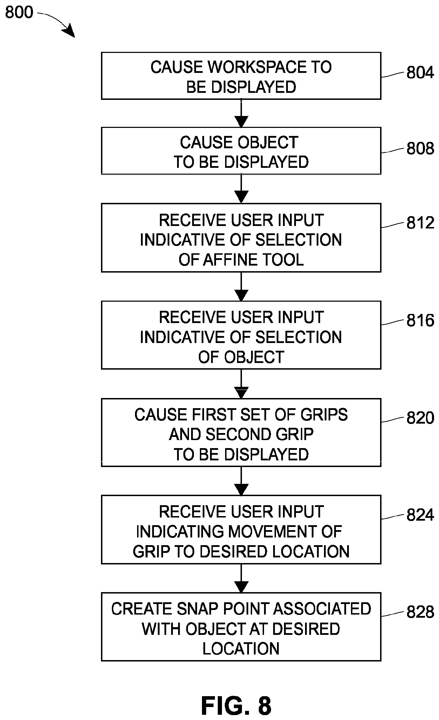

Fig. 8 is a flow diagram of an example method 800 for facilitating the moving of an object in a computer aided design system. The method 800 may be implemented by a device such as the example computer system 100 of Fig. 1, and will be described with reference to Fig. 1 for illustrative purposes. The method 800, however, may be implemented by other suitable devices as well. Additionally, the method 800 may be implemented in a CAD system workspace such as the example workspace 200 of Fig. 2, and will be described with reference to Fig. 2 for illustrative purposes. The method 800, however, may be utilized with other suitable workspaces as well.

At block 804, one or more processors cause a workspace to be displayed on a display device. For example, the one or more processors 104 cause the workspace 200 to be displayed on the display device 112. At block 808, the one or more processors cause an object to be displayed in the workspace. For example, the one or more processors 104 cause the object to be displayed in the workspace 200.

At block 812, a user input indicating selection of a tool is received. For example, the one or more processors 104 receive a user input via the one or more input devices 114 indicating selection of a tool such as the affine tool. At block 816, a user input indicating selection of the object displayed at block 808 is received. For example, the one or more processors 104 receive a user input via one of the one or more input devices 114 indicating selection of the object.

At block 820, the one or more processors cause a set of first grips and a second grip to be displayed on the display device in association with the object, in response to i) the user input indicating selection of the tool, and ii) the user input indicating selection of the object. In an embodiment, the set of first grips is associated with at least a resize function, and the second grip is associated with a snap point of the object.

At block 824, a user input indicating movement of the second grip to a desired location is received. For example, the one or more processors 104 receive the user input via the one or more input devices 114. At block 828, the one or more processors create a snap point associated with object at the desired location in response to the user input indicating movement of the second grip to the desired location. For example, the one or more processors 104 create the snap point.

In other embodiments, the set of first grips need not be in response to i) the user input indicating selection of the tool, and ii) the user input indicating selection of the object. For example, only the second grip is displayed or only a single first grip and the second grip are displayed. In these embodiments, in addition to the second grip being associated with a snap point of the object, the second grip may correspond to an affine function, such as a rotate function, a move function, a resize function, a skew function, etc. For example, a first portion of the second grip may be associated with the snap point, and a second portion of the second grip may be associated with the affine function.

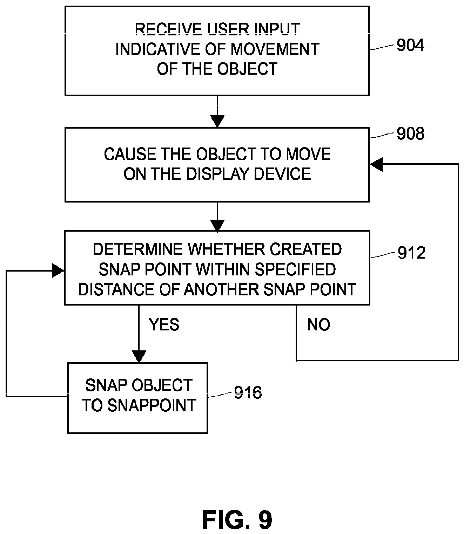

Fig. 9 is a flow diagram of an example method 900 for moving an object on a workspace of a computer aided design system after creation of a snap point according to a method such as the method of Fig. 8. The method 900 may be implemented by a device such as the example computer system 100 of Fig. 1, and will be described with reference to Fig. 1 for illustrative purposes. The method 900, however, may be implemented by other suitable devices as well. Additionally, the method 900 may be implemented in a CAD system workspace such as the example workspace 200 of Fig. 2, and will be described with reference to Fig. 2 for illustrative purposes. The method 900, however, may be utilized with other suitable workspaces as well.

At block 904, a user input indicating movement of the object is received. For example, the one or more processors 104 receive the user input via the one or more input devices 114. At block 908, the one or more processors cause the object to move on the display device in response to the user input of block 904.

At block 912, it is determined whether the created snap point is within a specified distance of another point on the workspace to which the snap point 604 can "snap". For example, the one or more processors 104 may determine whether the created snap point is within a specified distance of another point on the workspace to which the snap point 604 can "snap". The other point may be, for example, i) another snap point, ii) a portion of another object, such as a line, a vertex, etc., iii) a center of another object, iv) a grid point, etc. In some embodiments, the other point may be an "inferred" snap point, which may be a point derived from another object. As an example, the CAD system may generate inferred lines from an object, a point, etc., to help a user to line up lines, points, etc., in the drawing. An inferred snap point may be a point on an inferred vertical line projected from another point (e.g., a vertex or center point of an object), a point on an inferred horizontal line projected from another point (e.g., a vertex or center point of an object), a point on an inferred line that is an extension of an edge of an object, a point on an inferred line that is perpendicular to an edge of an objects edge, etc.

If it is determined that the created snap point is within a specified distance of another point on the workspace to which the snap point 604 can "snap", the flow proceeds to block 916. At block 916, the one or more processors cause the object to move so that the snap point of the object "snaps" to the other point. For example, the one or more processors 104 may cause the object to move so that the snap point of the object "snaps" to the other point. If it is determined that the created snap point is not within a specified distance of another point on the workspace to which the snap point 604 can "snap", the flow may return to block 908 to repeat the determination as the user input continues to indicate movement of the object on the workspace.

At least some of the various blocks, operations, and techniques described above may be implemented in hardware, a processor executing firmware and/or software instructions, or any combination thereof. When implemented utilizing a processor executing software or firmware instructions, the software or firmware instructions may be stored in any computer readable memory such as on a magnetic disk, an optical disk, or other tangible storage medium, in a RAM or ROM or flash memory, processor, hard disk drive, optical drive, tape drive, etc. Likewise, the software or firmware instructions may be delivered to a user or a system via any known or desired delivery method including, for example, on a computer readable disk or other transportable, tangible computer storage mechanism or via communication media. Communication media typically embodies computer readable instructions, data structures, program modules or other data in a modulated data signal such as a carrier wave or other transport mechanism. The term "modulated data signal" means a signal that has one or more of its characteristics set or changed in such a manner as to encode information in the signal. By way of example, and not limitation, communication media includes wired media such as acoustic, radio frequency, infrared and other wireless media. Thus, the software or firmware instructions may be delivered to a user or a system via a communication channel such as a telephone line, a DSL line, a cable television line, a fiber optics line, a wireless communication channel, the Internet, etc. (which are viewed as being the same as or interchangeable with providing such software via a transportable storage medium). The software or firmware instructions may include machine readable instructions stored on a computer readable memory that, when executed by the processor, cause the processor to perform various acts.

When implemented in hardware, the hardware may comprise one or more of discrete components, an integrated circuit, an application-specific integrated circuit (ASIC), a programmable logic device (PLD), etc.

While the present invention has been described with reference to specific examples, which are intended to be illustrative only and not to be limiting of the invention, changes, additions and/or deletions may be made to the disclosed embodiments without departing from the scope of the invention.

**Claims**

1. A method of moving a snap point (444-456) of an object (400), **characterized in that** the method comprises the steps of:

   selecting an object (400) on a workspace (200) of a computer-aided design system (100);
   selecting a tool (212) that results in a set of first grips (404-428) and a second grip (432) being displayed in association with the object (400), wherein the set of first grips (404-428) is associated with at least a resize function, and the second grip (432) comprises (i) a first portion (436) associated with a rotate function and (ii) a second portion (440) indicating a snap point (444-456) location of the object (400), wherein the second portion (440) of the second grip (432) also indicates a center of rotation for the rotate function and the first portion (436) of the second grip (432) enables a user to rotate the object (400) around the snap point (444-456), wherein the snap point (444-456) of the object (400) facilitates placement of the object (400) as the object is moved;
   selecting the second grip (432) of the object (400);
   moving the second grip (432) to a desired location (600) to create the snap point (444-456) for the object (400) at the desired location (600); and
   moving the object (400) so that the snap point (444-456) of the object (400) snaps to at least one of i) another point (700) on the workspace (200), ii) another object on the workspace (200), or iii) a line displayed on the workspace (200).

2. The method according to claim 1, wherein the desired location (600) for the snap point (444-456) is on or inside borders of the object (400).

3. The method according to claim 1, wherein the desired location (600) for the snap point is outside of borders of the object (400).

4. The method according to claim 1, wherein the second grip (432) is located at a center of the object (400).

5. The method according to any one of claims 1-4, further comprising removing the snap point (444-456) of the object (400) in response to de-selection of the object (400).

6. The method according to claim 5, further comprising:

   selecting the second grip (432) of the object (400) after creating the snap point (444-456) for the object (400); and
   moving the second grip (432) to another desired location (600) to create another snap point (444-456) for the object (400) at the another desired location (600).

7. The method according to claim 4, wherein the second grip (432) returns to the center of the object (400) once the snap point (444-456) has been created.

8. The method according to any one of claims 1-7, further comprising:

   determining whether the snap point (444-456) is within a specified distance of the at least one of i) another point (700) on the workspace (200), ii) another object on the workspace (200), or iii) a line displayed on the workspace(200); and
   when the snap point (444-456) is within the specified distance, causing the object (400) to move so that the snap point (444-456) of the object (400) snaps to the at least one of i) another point (700) on the workspace (200), ii) another object on the workspace (200), or iii) a line displayed on the workspace (200).

9. A tangible computer-readable medium (108) storing instructions, the instructions when executed by one or more processors (104) cause the one or more processors (104) to perform the steps of any one of claims 1-8.

**Patentansprüche**

1. Verfahren zum Bewegen eines Snap-Punkts (444-456) eines Objekts (400), **dadurch gekennzeichnet, dass** das Verfahren die Schritte umfasst:

Auswählen eines Objekts (400) auf einem Arbeitsbereich (200) eines CAD-Systems (100);

Auswählen eines Werkzeugs (212), was dazu führt, dass eine Gruppe von ersten Grips (404-428) und ein zweiter Grip (432) in Verbindung mit dem Objekt (400) angezeigt werden, wobei die Gruppe von ersten Grips (404-428) zu mindestens einer Größenänderungsfunktion gehört und der zweite Grip (432) (i) einen ersten Teil (436), der zu einer Drehfunktion gehört, und (ii) einen zweiten Teil (440) umfasst, der eine Snap-Punkt (444-456)-Position des Objekts (400) anzeigt, wobei der zweite Teil (440) des zweiten Grips (432) auch ein Rotationszentrum für die Drehfunktion anzeigt und der erste Teil (436) des zweiten Grips (432) einem Benutzer ermöglicht, das Objekt (400) um den Snap-Punkt (444-456) zu drehen, wobei der Snap-Punkt (444-456) des Objekts (400) eine Anordnung des Objekts (400) vereinfacht, wenn das Objekt bewegt wird;

Auswählen des zweiten Grips (432) des Objekts (400);

Bewegen des zweiten Grips (432) zu einer gewünschten Position (600), um den Snap-Punkt (444-456) für das Objekt (400) an der gewünschten Position (600) zu erzeugen; und

Bewegen des Objekts (400) derart, dass der Snap-Punkt (444-456) des Objekts (400) auf mindestens eines aus i) einem anderen Punkt (700) auf dem Arbeitsbereich (200), ii) einem anderen Objekt auf dem Arbeitsbereich (200) oder iii) einer Linie, die auf dem Arbeitsbereich (200) angezeigt wird, schnappt.

2. Verfahren nach Anspruch 1, wobei die gewünschte Position (600) für den Snap-Punkt (444-456) auf oder innerhalb Grenzen des Objekts (400) liegt.

3. Verfahren nach Anspruch 1, wobei die gewünschte Position (600) für den Snap-Punkt außerhalb Grenzen des Objekts (400) liegt.

4. Verfahren nach Anspruch 1, wobei der zweite Grip (432) in einer Mitte des Objekts (400) angeordnet ist.

5. Verfahren nach einem der Ansprüche 1 bis 4, ferner umfassend Entfernen des Snap-Punkts (444-456) des Objekts (400) in Reaktion auf eine Freigabe des Objekts (400).

6. Verfahren nach Anspruch 5, ferner umfassend:

Auswählen des zweiten Grips (432) des Objekts (400) nach dem Erzeugen des Snap-Punkts (444-456) für das Objekt (400); und

Bewegen des zweiten Grips (432) zu einer anderen gewünschten Position (600), um einen anderen Snap-Punkt (444-456) für das Objekt (400) an der anderen gewünschten Position (600) zu erzeugen.

7. Verfahren nach Anspruch 4, wobei der zweite Grip (432) zu der Mitte des Objekts (400) zurückkehrt, sobald der Snap-Punkt (444-456) erzeugt worden ist.

8. Verfahren nach einem der Ansprüche 1 bis 7, ferner umfassend:

Bestimmen, ob sich der Snap-Punkt (444-456) innerhalb eines festgelegten Abstands des mindestens einen aus i) einem anderen Punkt (700) auf dem Arbeitsbereich (200), ii) einem anderen Objekt auf dem Arbeitsbereich (200) oder iii) einer Linie, die auf dem Arbeitsbereich (200) angezeigt wird, befindet; und

Wenn sich der Snap-Punkt (444-456) innerhalb des festgelegten Abstands befindet, Bewirken, dass sich das Objekt (400) derart bewegt, dass der Snap-Punkt (444-456) des Objekts (400) auf mindestens eines aus i) einem anderen Punkt (700) auf dem Arbeitsbereich (200), ii) einem anderen Objekt auf dem Arbeitsbereich (200) oder iii) einer Linie, die auf dem Arbeitsbereich (200) angezeigt wird, schnappt.

9. Greifbares computerlesbares Medium (108), welches Befehle speichert, wobei die Befehle, wenn sie von einem oder mehreren Prozessoren (104) ausgeführt werden, bewirken, dass der eine oder die mehreren Prozessoren (104) die Schritte eines der Ansprüche 1 bis 8 ausführen.

**Revendications**

1. Procédé de déplacement d'un point d'accrochage (444-456) d'un objet (400), **caractérisé en ce que** le procédé comprend les étapes de :

sélectionner un objet (400) sur un espace de travail (200) d'un système de conception assisté par ordinateur (100) ;

sélectionner un outil (212) qui résulte en un jeu de premières prises (404-428) et une seconde prise (432) étant affichées en association avec l'objet (400), dans lequel le jeu de premières prises (404-428) est associé à au moins une fonction de redimensionnement, et la seconde prise (432) comprend (i) une première partie (436) associée à une fonction de rotation et (ii) une seconde partie (440) indiquant un emplacement de point d'accrochage (444-456) de l'objet (400), dans lequel la seconde partie (440) de la seconde prise (432) indique également un centre de rotation pour la fonction de rotation et la première partie (436) de la seconde prise (432) permet à un utilisateur de faire tourner l'objet (400) autour du point d'accrochage (444-456), dans lequel le point d'accrochage (444-456) de l'objet (400) facilite le placement de l'objet (400) à mesure que l'objet est déplacé ;

sélectionner la seconde prise (432) de l'objet (400) ;

déplacer la seconde prise (432) vers un emplacement souhaité (600) pour créer le point d'accrochage (444-456) pour l'objet (400) à l'emplacement souhaité (600) ; et

déplacer l'objet (400) de façon à ce que le point d'accrochage (444-456) de l'objet (400) s'accroche à au moins un i) d'un autre point (700) sur l'espace de travail (200), ii) d'un autre objet sur l'espace de travail (200) ou iii) d'une ligne affichée sur l'espace de travail (200).

2. Procédé selon la revendication 1, dans lequel l'emplacement souhaité (600) pour le point d'accrochage (444-456) est sur ou à l'intérieur de limites de l'objet (400).

3. Procédé selon la revendication 1, dans lequel l'emplacement souhaité (600) pour le point d'accrochage est hors de limites de l'objet (400).

4. Procédé selon la revendication 1, dans lequel la seconde prise (432) est située sur un centre de l'objet (400).

5. Procédé selon l'une quelconque des revendications 1 - 4, comprenant en outre de retirer le point d'accrochage (444-456) de l'objet (400) en réponse à la dé-sélection de l'objet (400).

6. Procédé selon la revendication 5, comprenant en outre :

de sélectionner la seconde prise (432) de l'objet (400) après la création du point d'accrochage (444-456) pour l'objet (400) ; et

de déplacer la seconde prise (432) vers un autre emplacement souhaité (600) pour créer un autre point d'accrochage (444-456) pour l'objet (400) sur l'autre emplacement souhaité (600).

7. Procédé selon la revendication 4, dans lequel la seconde prise (432) revient au centre de l'objet (400) une fois que le point d'accrochage (444-456) a été créé.

8. Procédé selon l'une quelconque des revendications 1 - 7, comprenant en outre :

de déterminer si le point d'accrochage (444-456) est dans une distance spécifiée de l'au moins un i) autre point (700) sur l'espace de travail (200), ii) autre objet sur l'espace de travail (200) ou iii) une ligne affichée sur l'espace de travail (200) ; et

lorsque le point d'accrochage (444-456) est dans la distance spécifiée, faire que l'objet (400) se déplace de façon à ce que le point d'accrochage (444-456) de l'objet (400) s'accroche à l'au moins un i) d'un autre point (700) sur l'espace de travail (200), ii) d'un autre objet sur l'espace de travail (200) ou iii) d'une ligne affichée sur l'espace de travail (200).

9. Support tangible (108) lisible sur ordinateur stockant des instructions, les instructions, lorsqu'elles sont exécutées par un ou des processeur(s) (104) font que l'un ou les processeur(s) (104) exécute(nt) les étapes selon l'une quelconque des revendications 1 - 8.

100

108

**Memory**

104

**Processor**

124

Bus

Mouse

120

Keyboard

116

114

Display

112

**FIG. 1**

212

204

208

**FIG. 2**

200

AB

abc

300 **FIG. 3A**

304 **FIG. 3B**

308 **FIG. 3C**

312 **FIG. 3D**

316 **FIG. 3E**

**FIG. 4A**

**FIG. 4B**

**FIG. 4C**

500

CHOOSE "SELECT" TOOL —504

CHOOSE ENTITY —508

MOVE CURSOR TO CENTER GRIP —512

CLICK AND HOLD MOUSE —516

MOVE CURSOR TO MOVE CENTER GRIP —520

RELEASE MOUSE AT DESTINATION POINT —524

A

FIG. 5A

TO BLOCK 512

528

$\textcircled{A}$

MOVE CURSOR OVER ENTITY ─532

CLICK AND HOLD MOUSE BUTTON ─536

MOVE CURSOR TO MOVE ENTITY ─540

RELEASE BUTTON AT DESTINATION ─544

DESELECT OBJECT ─548

# FIG. 5B

**FIG. 6A**

**FIG. 6B**

**FIG. 6C**

**FIG. 6D**

FIG. 7A

FIG. 7B

FIG. 7C

FIG. 7D

800

| CAUSE WORKSPACE TO BE DISPLAYED | 804 |

| CAUSE OBJECT TO BE DISPLAYED | 808 |

| RECEIVE USER INPUT INDICATIVE OF SELECTION OF AFFINE TOOL | 812 |

| RECEIVE USER INPUT INDICATIVE OF SELECTION OF OBJECT | 816 |

| CAUSE FIRST SET OF GRIPS AND SECOND GRIP TO BE DISPLAYED | 820 |

| RECEIVE USER INPUT INDICATING MOVEMENT OF GRIP TO DESIRED LOCATION | 824 |

| CREATE SNAP POINT ASSOCIATED WITH OBJECT AT DESIRED LOCATION | 828 |

**FIG. 8**

RECEIVE USER INPUT
INDICATIVE OF MOVEMENT
OF THE OBJECT — 904

CAUSE THE OBJECT TO MOVE
ON THE DISPLAY DEVICE — 908

DETERMINE WHETHER CREATED
SNAP POINT WITHIN SPECIFIED
DISTANCE OF ANOTHER SNAP POINT — 912

YES    NO

SNAP OBJECT
TO SNAPPOINT — 916

**FIG. 9**

**REFERENCES CITED IN THE DESCRIPTION**

**Patent documents cited in the description**

- US 6781597 B1
- US 6014127 A
- US 6448964 B1